# EUROPEAN PATENT SPECIFICATION

(11) **EP 3 308 977 B1**
(45) Date of publication and mention of the grant of the patent: **07.08.2019**
(21) Application number: 16811479.1
(22) Date of filing: 03.06.2016
(51) Int. Cl.: B60C 11/03, B60C 11/12

(54) **PNEUMATIC TIRE**
LUFTREIFEN
PNEUMATIQUE

(30) Priority: 13.06.2015 JP 2015119845
(43) Date of publication of application: 18.04.2018
(73) Proprietor: Bridgestone Corporation, Tokyo 104-8340 (JP)
(72) Inventor: SAEKI, Kentaro, Tokyo 104-8340 (JP)
(74) Representative: Oxley, Robin John George
(86) International application number: PCT/JP2016/066689
(87) International publication number: WO 2016/204004

(56) References cited:
- EP-A1- 0 561 326
- CH-A5- 566 877
- JP-A- 2008 049 958
- JP-A- 2012 020 714
- JP-A- 2014 162 429
- JP-A- 2015 058 734
- JP-A- 2015 074 427
- US-A- 3 556 190
- US-A- 5 918 654
- US-A1- 2009 255 615
- US-A1- 2011 017 375
- US-A1- 2013 306 210

## Description

### TECHNICAL FIELD

An aspect of the present invention relates to a pneumatic tire in which at least one circumferential narrow groove is formed in each of tread portion tread surfaces at both sides of a tire equator.

### BACKGROUND ART

Pneumatic tires such as, for example, the pneumatic tire recited in Japanese Patent Application Laid-Open (JP-A) No. 2012-020714 are known as conventional pneumatic tires.

The pneumatic tire disclosed in JP-A No. 2012-020714 is provided with: wide circumferential main grooves, one each being formed in each of tread portion tread surfaces at both sides of the tire equator, the circumferential main grooves extending continuously in the circumferential direction and not closing up during ground contact; plural lug grooves formed in the tread portion tread surfaces and separated in the circumferential direction, the lug grooves extending toward the tire equator from one or another of tread ends, and width direction inner end sides of the lug grooves terminating by opening into the circumferential main grooves; and a plural number (three) of circumferential narrow grooves formed to be separated in the tire width direction, the circumferential narrow grooves extending continuously in the circumferential direction between the circumferential main grooves, and opposing side walls of the circumferential narrow grooves contact each other during ground contact. JP-A No. 2012-020714 discloses the features of the pre-characterizing portion of claim 1.

### SUMMARY OF INVENTION

### TECHNICAL PROBLEM

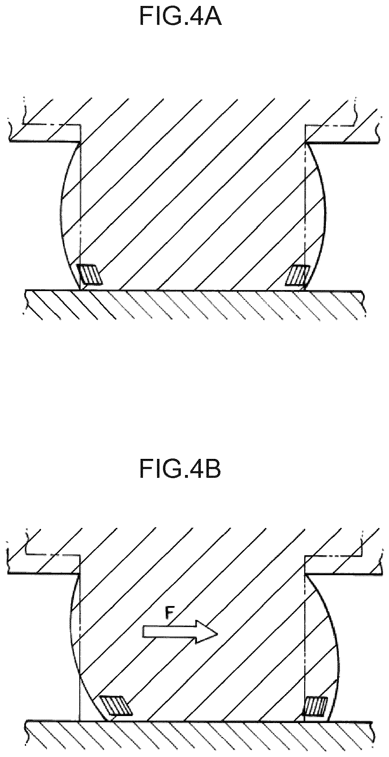

However, in this conventional pneumatic tire, because the circumferential main grooves are formed in the tread portion tread surfaces, when the circumferential main grooves and land portions demarcated between the tread ends and the circumferential main grooves are subject to loading, a radial direction (height direction) central portion of the tire is deformed, as schematically illustrated in Fig. 4A, so as to bulge from the state shown by imaginary lines to the state shown by solid lines. As a result, rubber at radial direction outer end portions of the land portions is deformed into parallelogram shapes as shown in Fig. 4A. In this state, when a lateral force F in the arrowed direction acts on the pneumatic tire due to steering of the vehicle or the like, the land portions are subject to shear forces and tilt over as shown by the solid lines in Fig. 4B. Consequently, rubber at the side of the rear end of the arrow is greatly deformed such that the parallelogram shape collapses further, as a result of which slipping may occur between this region and a road surface.

In addition, if circumferential main grooves are formed in tread portion tread surfaces as described above, then when the pneumatic tire is running along a wet road surface, water flowing into the circumferential main grooves is ejected toward the running direction front of the tire while spreading. As a result, the pneumatic tire is in a condition of riding over a thick layer of water to which the ejected water is added. Consequently, the area of the tread portion tread surfaces that is in direct contact with the road surface may be reduced. In recent years, with improvements in the performance of vehicles, there have been requests for pneumatic tires with excellent control stability and wet performance. However, it is not possible to satisfactorily meet these requests with a pneumatic tire like the tire described above.

An object of an aspect of the present invention is to provide a pneumatic tire that may improve performance in both control stability and wet performance.

### SOLUTION TO PROBLEM

This object may be achieved by a pneumatic tire according to the present invention, which is as claimed in claim 1.

### ADVANTAGEOUS EFFECTS OF INVENTION

In the pneumatic tire according to the present invention, the at least one circumferential narrow grooves are formed in the tread portion tread surfaces at the two sides of the tire equator S; the circumferential narrow grooves are the only grooves extending in the circumferential direction that are formed in the tread portion tread surfaces. When the land portions located at each side of the circumferential narrow grooves are subject to loading, a radial direction (height direction) central portion of each circumferential narrow groove is deformed so as to bulge and the opposing side walls of the circumferential narrow groove contact each other. That is, the side walls of adjacent land portions contact each other and the adjacent land portions support one another. As a result, an amount of tilting of the land portions when a lateral force is applied to the pneumatic tire due to steering of the vehicle or the like is reduced, slipping against a road surface is suppressed effectively, and control stability is improved.

Meanwhile, in the pneumatic tire according to the present invention, the width direction inner side ends of the lug grooves that extend towards the tire equator from the respective tread ends are terminated by opening into the outer side circumferential narrow grooves that are closest to the tread ends. Therefore, during running on a wet road surface, water between the road surface and the outer side circumferential narrow grooves is not ejected toward the running direction front while spreading but is drained through the lug grooves to the width direction outer sides of the pneumatic tire. Therefore, an area of the tread portion tread surfaces that is in direct contact with the road surface is larger and wet performance is improved. Thus, both control stability and wet performance may easily be improved with the pneumatic tire according to the present invention.

### BRIEF DESCRIPTION OF DRAWINGS

Fig. 1 is an expansion view of tread portion tread surfaces illustrating a first exemplary embodiment of the present invention.
Fig. 2 is a meridian line sectional diagram of a circumferential narrow groove vicinity during ground contact.
Fig. 3 is an expansion view of tread portion tread surfaces of an alternative pneumatic tire.
Fig. 4A is a schematic sectional diagram describing a deformation state of land portions during ground contact.
Fig. 4B is a schematic sectional diagram describing a deformation state of the land portions during ground contact.

### DESCRIPTION OF EMBODIMENTS

Herebelow, a first exemplary embodiment of the present invention is described in accordance with the drawings.

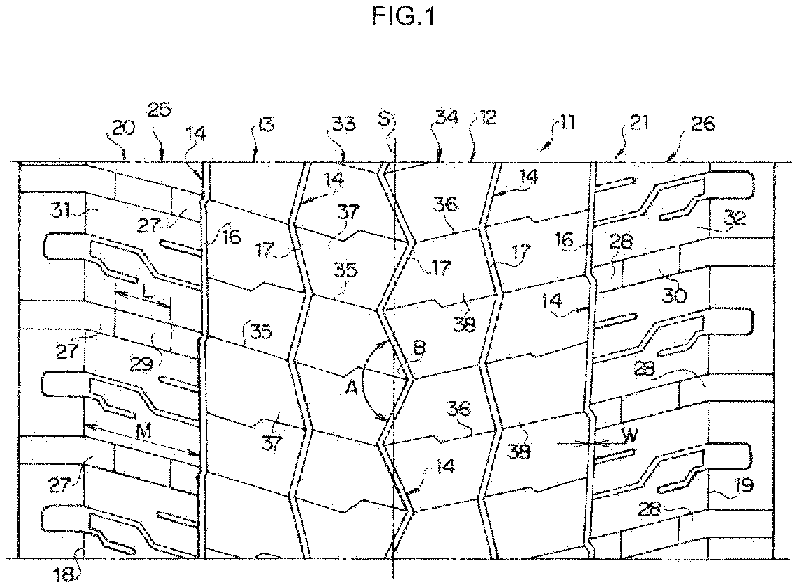

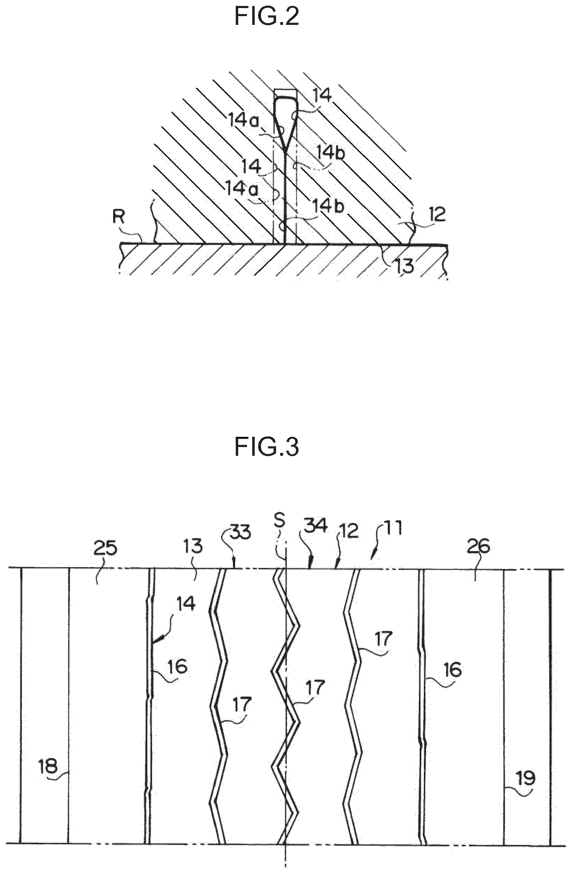

In Fig. 1 and Fig. 2, the reference symbol 11 indicates a pneumatic tire to be fitted to a truck, a bus or the like. The pneumatic tire 11 includes a substantially circular-tube-shaped tread portion 12 at a radial direction outer side thereof. At least one circumferential narrow groove 14 is formed at each of the two sides of a tire equator S (a tread center) of a tread surface 13 (an outer periphery surface) of the tread portion 12. In this exemplary embodiment, two of the circumferential narrow groove 14 are formed at each side of the tire equator S and one is formed on the tire equator S, for a total of five of the circumferential narrow grooves 14. Each circumferential narrow groove 14 extends continuously in the circumferential direction. A width W of the circumferential narrow groove 14 is a width such that opposing side walls 14a and 14b thereof contact each other during ground contact of the pneumatic tire 11. Specifically, a preferable width W is within a range from 0.5 mm to 3.0 mm. This is preferable because if the width W of the circumferential narrow groove 14 is less than 0.5 mm, an effect of improving drainage compared to a land portion in which no circumferential narrow groove 14 is provided cannot be discerned. On the other hand, if the width W is greater than 3.0 mm, the side walls 14a and 14b stay separated during ground contact and land portions disposed at the two sides of the circumferential narrow groove 14 do not support one another. In the present exemplary embodiment, the widths W of the five circumferential narrow grooves 14 are the same as one another. In an alternative exemplary embodiment of the present invention, one each of the circumferential narrow grooves 14 may be provided at the two sides of the tire equator S for a total of two of the circumferential narrow grooves 14.

In this exemplary embodiment, the circumferential narrow grooves 14 described above are the only grooves that extend in the circumferential direction formed in the tread surface 13 of the tread portion 12. No circumferential main groove is formed in the tread surface 13, generally meaning a wide groove extending in the circumferential direction with a groove width in a range from 4 mm to 18 mm. Only the at least one circumferential narrow groove 14 at each side of the tire equator S are formed in the tread surface 13 of the tread portion 12 (five of the circumferential narrow grooves 14 as described above); the circumferential narrow grooves 14 are the only grooves formed in the tread surface 13 of the tread portion 12 that extend in the circumferential direction. When land portions disposed at each side of the circumferential narrow grooves 14 are subject to loading, central portions in the radial direction (height direction) of each circumferential narrow groove 14 are deformed so as to bulge from the state illustrated by imaginary lines in Fig. 2 to the state illustrated by solid lines. Because of this deformation, the opposing side walls 14a and 14b of the circumferential narrow groove 14 contact each other. In other words, the side walls of the adjacent land portions contact each other and the adjacent land portions support one another. Consequently, an amount of tilting of the land portions when a lateral force is applied to the pneumatic tire 11 due to steering of the vehicle or the like is reduced, slipping against a road surface R is suppressed effectively, and control stability is improved. Incidentally, if the total number of the circumferential narrow grooves 14 described above exceeds seven, the widths of the land portions demarcated by the circumferential narrow grooves 14 are narrow and width direction stiffness decreases. Thus, control stability may decline. Therefore, to reliably improve control stability, it is preferable if the total number of the circumferential narrow grooves 14 is no more than seven.

The term "during ground contact of the pneumatic tire 11" mentioned above is intended to include a time at which, after the pneumatic tire has been mounted to a standard rim and filled to a standard internal pressure, the pneumatic tire is placed upright on a flat plate in a stationary state and a standard load is applied to the pneumatic tire. The term "standard rim" is intended to include a "standard rim" specified by JATMA, a "Design Rim" specified by TRA, or a "Measuring Rim" specified by ETRTO. The term "standard internal pressure" is intended to include a "maximum air pressure" specified by JATMA, a maximum value recited in "TIRE LOAD LIMITS AT VARIOUS COLD INFLATION PRESSURES" specified by TRA, or "INFLATION PRESSURES" specified by ETRTO. The term "standard load" is intended to include a "maximum load capacity" specified by JATMA, a maximum value recited in "TIRE LOAD LIMITS AT VARIOUS COLD INFLATION PRESSURES" specified by TRA, or a "LOAD CAPACITY" specified by ETRTO.

When three or more of the circumferential narrow grooves 14 are formed in the tread surface 13 as described above (a total of five in this exemplary embodiment), the two of the circumferential narrow grooves 14 that are closest to respective tread ends 18 and 19 serve as outer side circumferential narrow grooves 16, and the circumferential narrow grooves that are disposed between this pair of outer side circumferential narrow grooves 16 serve as inner side circumferential narrow grooves 17. Of these circumferential narrow grooves, at least the outer side circumferential narrow grooves 16-in this exemplary embodiment, both the outer side circumferential narrow grooves 16 and the inner side circumferential narrow grooves 17-are inflected in wave shapes, which are, for example, zigzags in the tire width direction that appear as sawtooth wave shapes or sinusoidal wave shapes. When the outer side circumferential narrow grooves 16-and similarly the inner side circumferential narrow grooves 17 in this exemplary embodiment-are inflected in these wave shapes, width direction edge components are increased. Thus, traction performance and braking performance of the pneumatic tire 11 during running may be improved. Peak-to-peak wave widths of the outer side circumferential narrow grooves 16 that are inflected in wave shapes as described above are smaller than peak-to-peak wave widths of the inner side circumferential narrow grooves 17. This is because large deformations occur at tread end portions 20 and 21 when a lateral force is applied during steering running of the pneumatic tire 11 or the like. If there are corner portions B with small intersection angles A at land portions disposed at the tread end portions 20 and 21, rubber chipping may occur at the corner portions B. However, when the peak-to-peak wave width of each outer side circumferential narrow groove 16 is smaller than the peak-to-peak wave width of each inner side circumferential narrow groove 17 as described above, the intersection angles A of the corner portions B of the land portions disposed at the tread end portions 20 and 21 have large values, as a result of which rubber chipping may be suppressed effectively.

In this exemplary embodiment, in order to strongly suppress rubber chipping as described above, the peak-to-peak wave widths of the outer side circumferential narrow grooves 16 and inner side circumferential narrow grooves 17 decrease progressively from the tire equator S towards the tread ends 18 and 19. In an alternative exemplary embodiment of the present invention, the outer side circumferential narrow grooves 16 and inner side circumferential narrow grooves 17 described above may extend completely straight rather than winding in the width direction (in straight line shapes). Moreover, it is not required that the outer side circumferential narrow grooves 16 and inner side circumferential narrow grooves 17 have the same shapes; the outer side circumferential narrow grooves 16 and inner side circumferential narrow grooves 17 may have pitches that are offset in the circumferential direction and may be formed with different wave widths and wave lengths. The reference symbols 25 and 26 indicate outer side land portions that extend continuously in the circumferential direction. The outer side land portions 25 and 26 are demarcated in the tread surface 13 of the tread portion 12 between the outer side circumferential narrow grooves 16 and the tread ends 18 and 19. Plural lug grooves 27 and 28 that are separated equidistantly in the circumferential direction extend through the outer side land portions 25 and 26 from the two tread ends 18 and 19 towards the tire equator S. Thus, the lug grooves 27 and 28 are respectively formed in the tread surface 13 of the tread portion 12 at both sides of the tire equator S.

The lug grooves 27 and 28 described above terminate by width direction inner end sides thereof (the ends that are closest to the tire equator S) opening into the outer side circumferential narrow grooves 16. Consequently, during running on a wet road surface, water disposed between the road surface R and ground contact areas close to the outer side circumferential narrow grooves 16 is not ejected toward the running direction front of the tire while spreading but is drained through the lug grooves 27 and 28 to the width direction outer sides of the pneumatic tire 11. Therefore, a layer of water between the pneumatic tire 11 and the road surface R is thinner, the area of direct ground contact between the tread surface 13 and the road surface R is larger, and wet performance is improved. Thus, in the present exemplary embodiment, both control stability and wet performance may easily be improved. Groove widths of the lug grooves 27 and 28 are wide, in a range from 4 mm to 18 mm, and opposing side walls thereof do not contact each other during ground contact. Groove widths within this range are preferable because if the groove widths of the lug grooves 27 and 28 are less than 4 mm, drainage of water towards the width direction outer sides of the pneumatic tire 11 may not be considered sufficient, and if the groove widths are greater than 18 mm, the ground contact area is reduced, lowering control stability and wear resistance.

The lug grooves 27 and 28 may cross at inclination angles of 90° with respect to the tire equator S, or the lug grooves 27 and 28 may cross at inclination angles a little less than 90° with respect to the tire equator S, as in this exemplary embodiment. As illustrated in Fig. 3, a configuration in which the lug grooves and width direction narrow grooves, which are described below, are not provided in the outer side land portions 25 and 26 and the circumferential narrow grooves are the only grooves formed in the land surfaces, and a configuration in which the lug grooves are terminated in the outer side land portions 25 and 26 partway to the outer side circumferential narrow grooves 16 (i.e., the width direction inner side ends of the lug grooves are disposed at the width direction outer sides relative to the outer side circumferential narrow grooves 16), can be considered, but these reduce wet performance a little. On the other hand, a configuration in which the lug grooves are extended beyond the outer side circumferential narrow grooves 16 and terminated in the land portions between the outer side circumferential narrow grooves 16 and the tire equator S (i.e., the width direction inner side ends of the lug grooves are disposed at the width direction inner sides relative to the outer side circumferential narrow grooves 16) can be considered. However, in this configuration the stiffness of the land portions at the tire equator S sides relative to the outer side circumferential narrow grooves 16 is likely to fall in the vicinities of the outer side circumferential narrow grooves 16, and uneven wear is likely to occur. In this exemplary embodiment, the lug grooves 27 and 28 are arranged with mirror symmetry about the tire equator S. Accordingly, angled directions of the lug grooves 27 and 28 with respect to the tire equator S are in opposite directions.

The outer side land portions 25 and 26 are divided by the lug grooves 27 and 28 into plural outer side blocks 31 and 32 that are separated in the circumferential direction. The outer side blocks 31 and outer side blocks 32 that are adjacent in the circumferential direction are partially connected with one another by protrusion portions 29 and 30. The protrusion portions 29 and 30 are formed inside the lug grooves 27 and 28, protruding from floor walls of the lug grooves 27 and 28. Accordingly, deformation of the outer side blocks 31 and 32 may be suppressed effectively without causing a deterioration in drainage. Extension lengths L of the protrusion portions 29 and 30 are preferably within a range from 0.3 to 1.0 times extension lengths M of the lug grooves 27 and 28 (which are distances from the tread ends 18 and 19 to the outer side circumferential narrow grooves 16 and inner side circumferential narrow grooves 17). Radial direction distances from the groove floors of the lug grooves 27 and 28 to the tops of the protrusion portions 29 and 30, which is to say heights of the protrusion portions 29 and 30, are preferably within a range from 0.5 to 0.8 times the groove depths of the lug grooves 27 and 28. These ranges are preferable because if the extension distances L are less than 0.3 times the extension lengths M, an effect of improving stiffness by connecting the outer side blocks 31 and 32 is insufficient and uneven wear of the outer side blocks 31 and 32 is likely to occur. Further, if the heights of the protrusion portions 29 and 30 are less than 0.5 times the groove depths of the lug grooves 27 and 28, the effect of improving stiffness by connecting the outer side blocks 31 and 32 is insufficient and uneven wear is likely to occur. On the other hand, if the heights of the protrusion portions 29 and 30 are greater than 0.8 times the groove depths of the lug grooves 27 and 28, drainage to the sides of the pneumatic tire 11 may be insufficient.

The reference symbols 33 and 34 indicate inner side land portions that are respectively formed in the tread surface 13 at both sides of the inner side circumferential narrow groove 17 that is disposed on the tire equator S, between the outer side circumferential narrow grooves 16. The inner side land portions 33 and 34 extend in the circumferential direction. Plural width direction narrow grooves 35 and 36 are formed in the inner side land portions 33 and 34. The width direction narrow grooves 35 and 36 are angled with respect to the tire equator S and are separated in the circumferential direction. Width direction inner ends of the width direction narrow grooves 35 and 36 terminate by opening into the inner side circumferential narrow groove 17 at the tire equator S, and width direction outer ends of the width direction narrow grooves 35 and 36 terminate by opening into the respective outer side circumferential narrow grooves 16. Width direction middle portions of the width direction narrow grooves 35 and 36 intersect with the inner side circumferential narrow grooves 17 that are at the two sides of the tire equator S. Thus, the inner side land portions 33 and 34 are demarcated-by the outer side circumferential narrow grooves 16, the inner side circumferential narrow grooves 17 and the width direction narrow grooves 35 and 36-into plural inner side blocks 37 and inner side blocks 38 that are separated in both the circumferential direction and the width direction. Similarly to the circumferential narrow grooves 14 described above, groove widths of the width direction narrow grooves 35 and 36 are such that opposing side walls thereof contacting each other during ground contact. Specifically, groove widths within a range from 0.5 mm to 3.0 mm are preferable. Accordingly, edge components may be increased while a shear force distribution over the whole of the inner side land portions 33 and 34 is made uniform. Angled directions of the width direction narrow grooves 35 and 36 that are formed at the two sides of the tire equator S as described above are directions the same as the angled directions of the lug grooves 27 and 28 that are formed at the same sides. That is, the angled directions of the width direction narrow grooves 35 and the lug grooves 27 are in the same direction, and the angled directions of the width direction narrow grooves 36 and the lug grooves 28 are in the same direction. Accordingly, if the direction of fitting of the pneumatic tire 11 to the vehicle (the tire turning direction) is regulated, drainage may be easily improved. In this exemplary embodiment, the inclination angles of the lug grooves 27 and 28 with respect to the tire equator S and the inclination angles of the width direction narrow grooves 35 and 36 with respect to the tire equator S are substantially the same angles.

Now, a test example is described. For this test, a practical tire 1, a practical tire 2, a practical tire 3 and a conventional tire were prepared. In practical tire 1, all the circumferential narrow grooves were inflected in wave shapes, groove widths thereof were all 1.5 mm, and projection portions with projection lengths L of 23 mm and heights of 11.0 mm were provided in the lug grooves. Practical tire 2 was the same as practical tire 1, except that the circumferential narrow grooves extended in straight line shapes. Practical tire 3 was the same as practical tire 1 except that the circumferential narrow grooves extended in straight line shapes and the projection portions were not provided in the lug grooves. The conventional tire was the same as practical tire 1 except that circumferential main grooves with groove widths of 8.0 mm were formed instead of the outer side circumferential narrow grooves of practical tire 1. The tread pattern of practical tire 1 was as illustrated in Fig. 1, and other structures thereof were the same as structures of widely known pneumatic tires.

The size of each tire was 315/70R22.5. The groove widths and groove depths of the lug grooves in each tire were 6 mm × 15 mm, the groove widths of width direction grooves were 0.5 mm, and the widths of outer side land portions were 45 mm. Each of these tires was fitted to a standard rim (rim size 9.00), and filled to an internal pressure of 900 kPa. The tire was then fitted to a truck, which was run along a dry road surface by a specialist driver, and control stability was evaluated in ten levels. The results for practical tires 1, 2 and 3 were, respectively, 8, 7 and 7, and the result for the conventional tire was 6. In these values, the higher the value, the better the control stability. Next, the truck was run along a wet road surface by a specialist driver, and wet performance was evaluated in ten levels. The results for practical tires 1, 2 and 3 were, respectively, 8, 8 and 8, and the result for the conventional tire was 7. In these values, the higher the value, the better the wet (steering stability) performance. The results for practical tires 1, 2 and 3 were, respectively, 8, 7 and 7, and the result for the conventional tire was 6. In these results, the higher the value, the better the control stability. Next, the truck was run along a wet road surface by a specialist driver, and wet performance was evaluated in ten levels. The results for practical tires 1, 2 and 3 were, respectively, 8, 8 and 8, and the result for the conventional tire was 7. In these results, the higher the value, the better the wet (steering stability) performance.

All disclosures of Japanese Patent Application No. 2015-119845 filed on June 13, 2015 are incorporated by reference into the present specification.

All references, patent applications and technical specifications cited in the present specification are incorporated by reference into the present specification to the same extent as if the individual references, patent applications and technical specifications were specifically and individually recited as being incorporated by reference.

The following notes are disclosed in relation to the exemplary embodiment described above.

### - Note 1 -

The pneumatic tire includes: circumferential narrow grooves, at least one of which is formed in each of tread portion tread surfaces at both sides of a tire equator S, the circumferential narrow grooves extending continuously in the circumferential direction, and opposing side walls thereof contacting each other during ground contact; and
a plurality of lug grooves formed in the tread portion tread surfaces and separated in the circumferential direction, each of the lug grooves extending towards the tire equator S from one or another of tread ends, wherein;
the circumferential narrow grooves are the only grooves extending in the circumferential direction, which are formed in the tread portion tread surfaces, and width direction inner side ends of the lug grooves respectively terminate by opening into the circumferential narrow grooves disposed at an outer side, which are circumferential narrow grooves that are closest to the respective tread ends.

In the pneumatic tire according to note 1, the at least one circumferential narrow grooves are formed in the tread portion tread surfaces at the two sides of the tire equator S; the circumferential narrow grooves are the only grooves extending in the circumferential direction that are formed in the tread portion tread surfaces. When the land portions located at each side of the circumferential narrow grooves are subject to loading, a radial direction (height direction) central portion of each circumferential narrow groove is deformed so as to bulge and the opposing side walls of the circumferential narrow groove contact each other. That is, the side walls of adjacent land portions contact each other and the adjacent land portions support one another. As a result, an amount of tilting of the land portions when a lateral force is applied to the pneumatic tire due to steering of the vehicle or the like is reduced, slipping against a road surface is suppressed effectively, and control stability is improved.

Meanwhile, in the pneumatic tire according to note 1, the width direction inner side ends of the lug grooves that extend towards the tire equator from the respective tread ends are terminated by opening into the outer side circumferential narrow grooves that are closest to the tread ends. Therefore, during running on a wet road surface, water between the road surface and the outer side circumferential narrow grooves is not ejected toward the running direction front while spreading but is drained through the lug grooves to the width direction outer sides of the pneumatic tire. Therefore, an area of the tread portion tread surfaces that is in direct contact with the road surface is larger and wet performance is improved. Thus, both control stability and wet performance may easily be improved with the pneumatic tire according to note 1.

### - Note 2 -

In the pneumatic tire recited in note 1, the outer side circumferential narrow grooves are inflected in wave shapes.

In the pneumatic tire according to note 2, width direction edge components are increased, improving traction performance and braking performance during running.

### - Note 3 -

In the pneumatic tire recited in note 2, circumferential narrow grooves disposed at inner side, which are circumferential narrow grooves that are disposed between the outer side circumferential narrow grooves, are inflected in wave shapes, and peak-to-peak wave widths of the outer side circumferential narrow grooves are smaller than peak-to-peak wave widths of the inner side circumferential narrow grooves.

Because large deformations occur when lateral forces are applied to land portions of tread end portions, if there are corner portions with small intersection angles at the land portions, chipping of the rubber may occur. However, according to the structure recited in note 3, intersection angles of the corner portions of the land portions at these positions have larger values. Thus, chipping of the rubber may be suppressed effectively.

### - Note 4 -

In the pneumatic tire recited in any one of notes 1 to 3, angled directions with respect to the tire equator S of the lug grooves formed at respective sides of the tire equator S are opposite directions; width direction narrow grooves are respectively formed in the tread portion tread surfaces disposed at both sides of the tire equator S, the width direction narrow grooves being angled with respect to the tire equator S, and opposing side walls of the width direction narrow grooves contacting each other during ground contact; and angled directions of the width direction narrow grooves formed at the respective sides of the tire equator S are the same as the angled directions of the lug grooves formed at a corresponding side.

According to the structure recited in note 4, when the fitting direction of the pneumatic tire to a vehicle (a turning direction of the tire) is regulated, drainage may be improved with ease.

### - Note 5 -

In the pneumatic tire recited in note 3, the total number of the circumferential narrow grooves is no more than seven.

According to the structure recited in note 5, control stability may be reliably improved.

### INDUSTRIAL APPLICABILITY

An aspect of the present invention is applicable to industrial fields in which at least one circumferential narrow groove is formed in each of tread portion tread surfaces at both sides of a tire equator.

## Claims

1. A pneumatic tire (11), comprising:
circumferential narrow grooves (14, 16, 17), at least one of which is formed in each of tread portion tread surfaces (13) at both sides of a tire equator (S), the circumferential narrow grooves (14, 16, 17) extending continuously in a circumferential direction; and
a plurality of lug grooves (27, 28) formed in the tread portion tread surfaces (13) and separated in the circumferential direction, each of the lug grooves (27, 28) extending towards the tire equator (S) from one or another of tread ends, wherein:
the circumferential narrow grooves (14, 16, 17) are the only grooves extending in the circumferential direction, which are formed in the tread portion tread surfaces (13),
width direction inner side ends of the lug grooves (27, 28) respectively terminate by opening into the circumferential narrow grooves (14, 16) disposed at an outer side, which are circumferential narrow grooves (14, 16) that are closest to the respective tread ends,
the outer side circumferential narrow grooves (14, 16) are inflected in wave shapes, and
circumferential narrow grooves (14, 17) disposed at inner side, which are circumferential narrow grooves (14, 17) that are disposed between the outer side circumferential narrow grooves (14, 16), are inflected in wave shapes, and peak-to-peak wave widths of the outer side circumferential narrow grooves (14, 16) are smaller than peak-to-peak wave widths of the inner side circumferential narrow grooves (14, 17),
**characterized in that** each of the circumferential narrow grooves (14, 16, 17) has a width (W) within a range from 0.5 mm to 3.0 mm and opposing side walls (14a, 14b) of each of the circumferential narrow grooves (14, 16, 17) contact each other during ground contact, wherein:
the ground contact of the pneumatic tire (11) is to be interpreted as a time at which, after the pneumatic tire has been mounted to a standard rim and filled to a standard internal pressure, the pneumatic tire is placed upright on a flat plate in a stationary state and a standard load is applied to the pneumatic tire,
the standard rim includes either a "standard rim" specified by JATMA, a "Design Rim" specified by TRA, or a "Measuring Rim" specified by ETRTO,
the standard internal pressure includes either a "maximum air pressure" specified by JATMA, a maximum value recited in "TIRE LOAD LIMITS AT VARIOUS COLD INFLATION PRESSURES" specified by TRA, or "INFLATION PRESSURES" specified by ETRTO,
the standard load includes either a "maximum load capacity" specified by JATMA, a maximum value recited in "TIRE LOAD LIMITS AT VARIOUS COLD INFLATION PRESSURES" specified by TRA, or a "LOAD CAPACITY" specified by ETRTO.

2. The pneumatic tire (11) according to claim 1, wherein:
angled directions with respect to the tire equator (S) of the lug grooves (27, 28) formed at respective sides of the tire equator (S) are opposite directions;
width direction narrow grooves (35, 36) are respectively formed in the tread portion tread surfaces (13) disposed at both sides of the tire equator (S), the width direction narrow grooves (35, 36) being angled with respect to the tire equator (S), and opposing side walls of the width direction narrow grooves (35, 36) contacting each other during ground contact; and
angled directions of the width direction narrow grooves (35, 36) formed at the respective sides of the tire equator (S) are the same as the angled directions of the lug grooves (27, 28) formed at a corresponding side.

3. The pneumatic tire (11) according to claim 1, wherein a total number of the circumferential narrow grooves (14, 16, 17) is no more than seven.

## Patentansprüche

1. Luftreifen (11), der Folgendes umfasst:
umlaufende schmale Rillen (14, 16, 17), von denen wenigstens eine in jeder von Laufflächenabschnitt-Laufflächen (13) auf beiden Seiten eines Reifenäquators (S) geformt ist, wobei sich die umlaufenden schmalen Rillen (14, 16, 17) durchgehend in einer Umfangsrichtung erstrecken, und
mehrere Stollenrillen (27, 28), die in den Laufflächenabschnitt-Laufflächen (13) geformt und in der Umfangsrichtung getrennt sind, wobei sich jede der Stollenrillen (27, 28) von dem einen oder dem anderen von Laufflächenenden zu dem Reifenäquator (S) hin erstreckt, wobei:
die umlaufenden schmalen Rillen (14, 16, 17) die einzigen Rillen sind, die sich in der Umfangsrichtung erstrecken, die in den Laufflächenabschnitt-Laufflächen (13) geformt sind,
in Breitenrichtung innenseitige Enden der Stollenrillen (27, 28) jeweils dadurch enden, dass sie sich in die umlaufenden schmalen Rillen (14, 16) öffnen, die an einer äußeren Seite angeordnet sind, die umlaufende schmale Rillen (14, 16) sind, die den jeweiligen Laufflächenenden am nächsten sind,
die außenseitigen umlaufenden schmalen Rillen (14, 16) in Wellenformen gekrümmt sind und
umlaufende schmale Rillen (14, 17), die an einer inneren Seite angeordnet sind, die umlaufende schmale Rillen (14, 17) sind, die zwischen den außenseitigen umlaufenden schmalen Rillen (14, 16) angeordnet sind, in Wellenformen gekrümmt sind und Wellenbreiten der außenseitigen umlaufenden schmalen Rillen (14, 16) von Spitze zu Spitze kleiner sind als Wellenbreiten der innenseitigen umlaufenden schmalen Rillen (14, 17) von Spitze zu Spitze,
**dadurch gekennzeichnet, dass** jede der umlaufenden schmalen Rillen (14, 16, 17) eine Breite (W) innerhalb eines Bereichs von 0,5 mm bis 3,0 mm aufweist und gegenüberliegende Seitenwände (14a, 14b) jeder der umlaufenden schmalen Rillen (14, 16, 17) einander während einer Bodenberührung berühren, wobei:
die Bodenberührung des Luftreifens (11) als die Zeit auszulegen ist, zu der, nachdem der Luftreifen auf einer standardmäßigen Felge montiert worden und auf einen standardmäßigen Innendruck gefüllt worden ist, der Luftreifen aufrecht auf einer flachen Platte in einem unbeweglichen Zustand platziert wird und eine standardmäßige Last auf den Luftreifen ausgeübt wir,
die standardmäßige Felge entweder eine durch JATMA spezifizierte "standardmäßige Felge", eine durch TRA spezifizierte "Entwurfsfelge" oder eine durch ETRTO spezifizierte "Messfelge" einschließt,
der standardmäßige Innendruck entweder einen durch JATMA spezifizierten "maximalen Luftdruck", einen in "Tire Load Limits at Various Cold Inflation Pressures" angegebenen, durch TRA spezifizierten Höchstwert oder durch ETRTO spezifizierte "Aufblasdrücke" einschließt,
die standardmäßige Last entweder eine durch JATMA spezifizierte "maximale Tragfähigkeit", einen in "Tire Load Limits at Various Cold Inflation Pressures" angegebenen, durch TRA spezifizierten Höchstwert oder eine durch ETRTO spezifizierte "Tragfähigkeit" einschließt.

2. Luftreifen (11) nach Anspruch 1, wobei:
in Bezug auf den Reifenäquator (S) abgewinkelte Richtungen der Stollenrillen (27, 28), die an jeweiligen Seiten des Reifenäquators (S) geformt sind, entgegengesetzte Richtungen sind,
schmale Rillen (35, 36) in Breitenrichtung jeweils in den Laufflächenabschnitt-Laufflächen (13) geformt sind, die auf beiden Seiten des Reifenäquators (S) angeordnet sind, wobei die schmalen Rillen in Breitenrichtung (35, 36) in Bezug auf den Reifenäquator (S) abgewinkelt sind und gegenüberliegende Seitenwände der schmalen Rillen in Breitenrichtung (35, 36) einander während einer Bodenberührung berühren, und
abgewinkelte Richtungen der schmalen Rillen in Breitenrichtung (35, 36) die an den jeweiligen Seiten des Reifenäquators (S) geformt sind, die gleichen sind wie die abgewinkelten Richtungen der Stollenrillen (27, 28), die an einer entsprechenden Seite geformt sind.

3. Luftreifen (11) nach Anspruch 1, wobei eine Gesamtzahl der umlaufenden schmalen Rillen (14, 16, 17) nicht mehr als sieben beträgt.

## Revendications

1. Bandage pneumatique (11), comprenant :
des rainures circonférentielles étroites (14, 16, 17), dont au moins une est formée dans chacune des surfaces de bande de roulement (13) de la partie de bande de roulement, au niveau des deux côtés de l'équateur du bandage pneumatique (S), les rainures circonférentielles étroites (14, 16, 17) s'étendant en continu dans une direction circonférentielle ; et
plusieurs rainures à barrettes (27, 28) formées dans les surfaces de bande de roulement (13) de la partie de bande de roulement et séparées dans la direction circonférentielle, chacune des rainures à barrettes (27, 28) s'étendant vers l'équateur du bandage pneumatique (S) à partir de l'une ou de l'autre des extrémités de la bande de roulement, dans lequel :
les rainures circonférentielles étroites (14, 16, 17) constituent les seules rainures s'étendant dans la direction circonférentielle, formées dans les surfaces de bande de roulement (13) de la partie de bande de roulement ;
les extrémités du côté interne, dans la direction de la largeur, des rainures à barrettes (27, 28) se terminent respectivement par une ouverture dans les rainures circonférentielles étroites (14, 16) disposées au niveau d'un côté externe, constituant des rainures circonférentielles étroites (14, 16) qui sont les plus proches des extrémités respectives de la bande de roulement ;
les rainures circonférentielles étroites du côté externe (14, 16) sont infléchies en forme d'onde ; et
les rainures circonférentielles étroites (14, 17) disposées au niveau d'un côté interne, constituant des rainures circonférentielles étroites (14, 17) disposées entre les rainures circonférentielles étroites du côté externe (14, 16), sont infléchies en forme d'onde, et les largeurs d'onde de crête à crête des rainures circonférentielles étroites du côté externe (14, 16) sont inférieures aux largeurs d'onde de crête à crête des rainures circonférentielles étroites du côté interne (14, 17) ;
**caractérisé en ce que** chacune des rainures circonférentielles étroites (14, 16, 17) a une largeur (W) comprise dans un intervalle allant de 0,5 mm à 3,0 mm, et des parois latérales opposées (14a, 14b) de chacune des rainures circonférentielles étroites (14, 16, 17) se contactant l'une l'autre au cours du contact au sol ; dans lequel :
le contact au sol du bandage pneumatique (11) doit être interprété comme constituant un temps où, après le montage du bandage pneumatique sur une jante standard et son remplissage à une pression interne standard, le bandage pneumatique est positionné droit sur une plaque plate, dans un état stationnaire, une charge standard étant appliquée au bandage pneumatique ;
la jante standard inclut une « jante standard » spécifiée par JATMA, une « jante de conception » spécifiée par TRA, ou une «jante de mesure » spécifiée par ETRTO ;
la pression interne standard inclut une « pression d'air maximale » spécifiée par JATMA, une valeur maximale citée dans « TIRE LOAD LIMITS AT VARIOUS COLD INFLATION PRESSURES » spécifiée par TRA, ou des « pressions de gonflement » spécifiées par ETRTO ;
la charge standard inclut une « capacité de charge maximale » spécifiée par JATMA, une valeur maximale citée dans « TIRE LOAD LIMITS AT VARIOUS COLD INFLATION PRESSURES » spécifiée par TRA, ou une « capacité de charge » spécifiée par ETRTO.

2. Bandage pneumatique (11) selon la revendication 1, dans lequel :
des directions inclinées par rapport à l'équateur du bandage pneumatique (S) des rainures à barrettes (27, 28) formées au niveau des côtés respectifs de l'équateur du bandage pneumatique (S) sont des directions opposées ;
des rainures étroites dans la direction de la largeur (35, 36) sont respectivement formées dans les surfaces de bande de roulement d(3) de la partie de bande de roulement, disposées au niveau des deux côtés de l'équateur du bandage pneumatique (S), les rainures étroites dans la direction de la largeur (35, 36) étant inclinées par rapport à l'équateur du bandage pneumatique (S), et des parois latérales opposées des rainures étroites dans la direction de la largeur (35, 36) se contactant l'une l'autre au cours du contact au sol ; et
des directions inclinées des rainures étroites dans la direction de la largeur (35, 36) formées au niveau des côtés respectifs de l'équateur du bandage pneumatique (S) sont identiques aux directions inclinées des rainures à barrettes (27, 28) formées au niveau d'un côté correspondant.

3. Bandage pneumatique (11) selon la revendication 1, dans lequel un nombre total des rainures circonférentielles étroites (14, 16, 17) n'est pas supérieur à sept.
